# EUROPEAN PATENT APPLICATION

(11) **EP 2 774 936 A1**
(43) Date of publication of application: **10.09.2014**
(21) Application number: 14171011.1
(22) Date of filing: 11.12.2009
(51) Int. Cl.: C08G 18/48, C08G 69/40, C08L 71/02, C08G 63/66, C08L 67/02, C08L 75/08

(54) **Improved elastomeric compositions**

(62) Divisional of application: 09852140.4
(71) Applicant: Invista Technologies S.à.r.l., 9000 St. Gallen (CH)
(72) Inventor: Sun, Qun, Wilmington, DE Delaware 19808-1106 (US); Mcinnis, Edwin, L., Zachary, LA Louisiana 70791-5445 (US)
(74) Representative: Cockerton, Bruce Roger

(57) **Abstract**

The present invention relates to a novel polyurethane, copolyether ester or copolyether amide elastomer composition comprising a glycol derived from random copolymerization of alkylene oxide and tetrahydrofuran (THF), the alkylene oxide having from 2 to 4 carbon atoms, i.e., poly(tetramethylene-co-alkyleneether) glycol.

## Description

### BACKGROUND OF THE INVENTION

The present invention relates to novel elastomeric compositions and structures and products made from them. The structures and products, e.g., films, membranes or coatings, are highly permeable materials having good mechanical strength which overcome deficiencies in the prior art. These materials employ a random copolyether polyol soft segment which has an alkylene oxide, e.g., ethylene oxide (EO), content of from about 20 to about 75 mol % and can conveniently be formed into films, membranes or coatings. These elastomer compositions can be polyurethanes, copolyether esters or copolyether amides. The random copolyether polyol soft segment of the elastomer compositions comprises a glycol derived from random copolymerization of alkylene oxide and tetrahydrofuran (THF), the alkylene oxide having from 2 to 4 carbon atoms, i.e., poly(tetramethylene-co-alkyleneether) glycol.

It is known that the inclusion of ethylene oxide units in a polymer will increase the hydrophilicity of said polymer and affect the water vapor permeability of articles made from that polymer. Due to the importance of this property in certain manufactured goods, such as, for example, breathable waterproof clothing articles and medical articles such as bandages and wound dressings, researchers have tried to affect these properties by a variety of different methods. Many of such methods and the manufactured goods comprising same have troublesome shortcomings or deficiencies which create problems, such as, for example, adding to costs for production, or providing inadequate levels of moisture transport or mechanical properties such as tensile strength.

U. S. Patent No. 6,133,400 teaches that a reactive hot melt adhesive formulation containing a polyether polyol derived from ethylene, propylene or butylene oxide or combinations can be made with a vapor transmission rate (MVTR) of greater than 100 g-mil/m²-day. These materials are used in combination with crystalline polyester polyols, another polyether glycol and a polyisocyanate to obtain the adhesive. These materials offer a degree of moisture transport, but rely upon the presence of moisture to generate the amine necessary for chain extension and hard segment formation. An additional reaction product is carbon dioxide which can produce physical defects. Additionally, the adhesive requires extended storage in order to fully cure through the agency of ambient moisture, and this process must generally be conducted on a supporting material.

U. S. Patent No. 5,908,690 describes a water proof and breathable film produced by extrusion of thermoplastic polyurethane containing 35 to 60 wt % soft segment made from polyethylene oxide or polyethylene oxide reaction products such as ethylene oxide polymers and copolymers, etc. THF is provided as an example of cyclic ether with which ethylene oxide can be copolymerized. The product of this publication relies upon high levels of ethylene oxide units (in the form of polyethylene glycol soft segment) to obtain the desired permeability. No examples of a soft segment other than polyethylene glycol are presented and the level by weight is above 42 wt %. In general, an article produced from polyethylene glycol suffers from the lack of adequate mechanical strength and could also lead to excessive uptake of moisture in the final product. Additionally, the use of a reinforcing agent (silica) and a chain terminator is required in order to obtain the desired properties.

EP 0620506 A2 discloses a charging element used in photocopying which is formed with a moisture permeable synthetic resin as the surface layer. One version of the synthetic resin is a polyurethane resin with a soft segment consisting of a random copolymer of ethylene oxide and tetrahydrofuran with an EO/THF mol ratio of 40/60 to 80/20 and a molecular weight of 600 to 3000. The product of this publication is produced by bulk or solution polymerization with an unspecified soft segment concentration. The material must be melt processable and is further granulated, dissolved in solvent, and applied to a rubber material in order to be of utility. Although permeability and swell ratio are cited as critical requirements for utility, no values of these properties are provided for the compositions claimed.

U. S. Patent No. 5,035,893 discloses a wound covering material constructed from a biopolymeric material and a moisture permeable film. The polyurethane resin of this material is made in solution from a diisocyanate, a chain extender, and a tetrahydrofuran-ethylene oxide copolymer polyol. The polyol contains 20 to 80 wt % ethylene oxide and has a molecular weight of 800 to 3000 dalton. The product of this publication is limited in that the diamine extended polymer is prepared in solution. The product must be precipitated and redissolved in an acceptable solvent for fabrication as a film on a biopolymeric substrate.

EP 0974696 A1 describes a seam sealing composition for water vapor permeable articles. The composition is a solution, which is coated on the article, consisting of a copolyether ester (COPE) in which the soft segment has a carbon/oxygen ratio of 2.0 to 4.3 and a molecular weight of 600 to 4000 dalton. The sealing compositions described are blends of polyethylene glycol (PEG) and polytetramethylene ether glycol (PTMEG), and are further modified by the addition of aliphatic or unsymmetrical aromatic diacid in order to produce lower melting copolyester with adequate solubility in halocarbon solvent. The use of a halocarbon solvent is required in order to obtain the swelling necessary for adhesion. The shortcomings of using the homopolymer PEG, i.e., inferior mechanical properties and excessive water uptake, are anticipated.

EP 0622488 B1 describes a water proof article in which a COPE film is laminated to a textile, said film being made as described in EP 0974696 A1, however no solvent is employed and films are prepared by hot pressing. The product of this publication is comprised of naphthalene dicarboxylic acid and 1,4-butanediol (4GN) hard segment and a polyethylene glycol soft segment or a mixture of polyethylene glycol and polytetramethylene ether glycol.

U. S. Patent No. 4,937,314 discloses thermoplastic copolyether ester elastomers comprising at least 70 weight % soft segments derived from poly (alkylene oxide) glycols and terephthalic acid. The hard segments constitute 10 to 30 weight % of the elastomer and are 95 to 100% poly (1, 3-propylene terephthalate). The specification discloses that the poly (alkylene oxide) glycols have a molecular weight of from 1,500 to 5,000 and a carbon-to-oxygen ratio of from 2 to 4.3. Representative poly (alkylene oxide) glycols include poly (ethylene oxide) glycol, poly (1,2-propylene oxide) glycol, poly(1,3-propylene oxide) glycol, poly(tetramethylene oxide) glycol, etc. In the examples, the soft segments are based on PTMEG and tetrahydrofuran/ethylene oxide copolyether.

U.S. Patent No. 5,128,185 describes thermoplastic copolyether ester elastomers comprising at least 83 weight % soft segments derived from poly (alkylene oxide) glycols and terephthalic acid. The hard segments constitute 10-17 weight % and comprise poly (1,3-propylenebibenzoate). The specification discloses that the poly (alkylene oxide) glycols have a molecular weight of from 1,500 to 5,000 and a carbon-to-oxygen ratio of from 2.5 to 4.3. Representative examples include poly (ethylene oxide) glycol, poly (1,2-propylene oxide) glycol, poly(1,3-propylene oxide) glycol, poly(tetramethylene oxide) glycol, etc. In the examples, the soft segments are based on PTMEG and tetrahydrofuran/3-methyl tetrahydrofuran.

The techniques and compositions of the above publications are limited in that they employ either polyethylene glycol or blends thereof and other polyols such as the poly(1,2-propylene oxide) glycol (PPG) or the ethylene oxide capped polypropylene glycol (EOPPG) rather than the random copolymers of alkylene oxide, e.g., ethylene oxide, and THF. It is well recognized that thermoplastic polyurethane or copolyether ester derived from the PPG or EOPPG have inferior mechanical properties in comparison to that produced from the polytetra-methylene ether glycol (PTMEG). Where glycols derived from polymerization of ethylene oxide and THF (EOTHF random copolymers) are described, they require the use of ancillary ingredients and the material is coated from solution to produce the permeable film. None of these publications teach or suggest elastomeric compositions comprising from about 20 to less than about 70 wt %, e.g., 69 wt %, first component polyol derived from random copolymerization of alkylene oxide having from 2 to 4 carbon atoms and tetrahydrofuran, i.e., poly(tetramethylene-co-alkyleneether) glycol, and from more than about 30, e.g., 31 wt %, to about 80 wt % second component polyurethane, copolyether ester or copolyether amide, said elastomeric composition having a water vapor transmission rate of greater than about 250 g-mil/m²-day and a tensile strength greater than about 1500 psi. These new elastomeric compositions have the unique combination of properties disclosed herein, such as, by way of non-limiting examples, water vapor permeability and mechanical strength.

### SUMMARY OF THE INVENTION

Accordingly, it is desirable to provide novel elastomeric compositions and structures and products made from them having desirable properties including a water vapor transmission rate of greater than about 250 g-mil/m²-day, especially from about 500 to about 2000 g-mil/m²-day, and good mechanical strength of, for example, a tensile strength >1500 psi according to ASTM D412. The structures and products of the present invention, e.g., films, are highly permeable materials with good mechanical strength which overcome deficiencies experienced in like structures and products of the prior art. These materials employ a random copolyether polyol soft segment which has an alkylene oxide, e.g., ethylene oxide, content of from about 20 to about 75 mol % and can conveniently be formed into films. These elastomer compositions can be polyurethanes or copolyether esters or amides. The random copolyether polyol soft segment of the elastomer compositions comprises a glycol derived from random copolymerization of alkylene oxide and tetrahydrofuran (THF), the alkylene oxide having from 2 to 4 carbon atoms, i.e., poly(tetramethylene-co-alkyleneether) glycol. The novel elastomer compositions of the present invention are highly useful in, for example, the fibers and films industries. When used as a film, such as for fabric lamination to produce breathable clothing, the novel elastomer compositions of the present invention will have well-balanced flexibility properties, tensile and tear properties, and hydrolysis resistance properties. Another advantage of such novel elastomer compositions may be to enable more economical manufacture of moisture control products having unique properties.

Therefore, an important embodiment of the present invention provides novel polyurethane, copolyether ester or copolyether amide elastomer compositions comprising a glycol derived from random copolymerization of alkylene oxide and tetrahydrofuran (THF), the alkylene oxide having from 2 to 4 carbon atoms, i.e., poly(tetramethylene-co-alkyleneether) glycol. The elastomer compositions of the present invention have unique combinations of properties including ease of processing and reactivity along with a water vapor transmission rate of greater than about 250 g-mil/m²-day, especially from about 500 to about 2000 g-mil/m²-day, and good mechanical strength of, for example, a tensile strength >1500 psi according to ASTM D412, and percent elongation of greater than about 200 %, especially from about 300 to about 900%.

More specifically, an important embodiment of the present invention provides novel polyurethane or copolyether ester or amide elastomer compositions comprising a glycol derived from random copolymerization of ethylene oxide and tetrahydrofuran (THF), i.e., poly(tetramethylene-co-ethyleneether) glycol.

Still further, an important embodiment of the present invention is a structure or product comprising the novel polyurethane or copolyether ester or amide elastomer compositions comprising a glycol derived from random copolymerization of alkylene oxide and tetrahydrofuran (THF), the alkylene oxide having from 2 to 4 carbon atoms, i.e., poly(tetramethylene-co-alkyleneether) glycol. The structure or product comprising this elastomer composition of the present invention may be, for example, a film or coating.

### DETAILED DESCRIPTION

Disclosed is a method to manufacture novel polyurethane, copolyether ester or copolyether amide elastomer compositions comprising a glycol derived from random copolymerization of alkylene oxide and tetrahydrofuran (THF), the alkylene oxide having from 2 to 4 carbon atoms, i.e., poly(tetramethylene-co-alkyleneether) glycol, to have certain specific desirable properties. The poly(tetramethylene-co-alkyleneether) glycol may be manufactured by a method described in U.S. Patent No. 4,139,567, incorporated herein by reference, or as described below.

As used herein, the term "polymer" refers to the product of a polymerization reaction, and is inclusive of homopolymers, copolymers, terpolymers, etc.

As used herein, unless specified otherwise, the term "copolymer(s)" refers to polymers formed by the polymerization of at least two different monomers. For example, the term "copolymer" includes the copolymerization reaction product of ethylene and an alpha-olefin (α-olefin), such as by way of example propylene and 1-hexene, or an alkylene oxide such as ethylene oxide and tetrahydrofuran. However, the term "copolymer" is also inclusive of, for example, the copolymerization of a mixture of ethylene, propylene, 1-hexene, and 1-octene, or a mixture of various alkylene glycols and tetrahydrofuran.

As used herein, mol percent ("mol %"), unless noted otherwise, means a percent of a particular component based on the total mols of the mixture containing the component. For example, if a mixture contains three mols of compound A and one mol of compound B, then the compound A comprises 75 mol % of the mixture and the compound B comprises 25 mol %. This theory applies for designations of weight percent ("wt %") as well.

The polyurethane or copolyether ester or amide elastomer compositions of the present invention comprise a first component, i.e., a soft segment, of from about 20 to less than about 70 wt %, e.g., 69 wt %, preferably from about 35 to about 65 wt %, glycol derived from random copolymerization of alkylene oxide and tetrahydrofuran (THF), the alkylene oxide having from 2 to 4 carbon atoms, e.g., ethylene oxide (EO), a propylene oxide or a butylene oxide. The compositions further comprise a second component, i.e., a hard segment, comprising from more than about 30 wt %, e.g., 31 wt %, to about 80 wt %, preferably from about 35 to about 65 wt %, polyurethane, copolyether ester or copolyether amide. The compositions exhibit desirable properties including a water vapor transmission rate of greater than about 250 g-mil/m²-day, especially from about 500 to about 2000 g-mil/m²-day, and good mechanical strength of, for example, a tensile strength >1500 psi according to ASTM D412.

The random copolymer of alkylene oxide and tetrahydrofuran, i.e., poly(tetramethylene-co-alkyleneether) glycol, required for use herein is manufactured by the cationic ring opening copolymerization of alkylene oxide and tetrahydrofuran. The final polyol has a molecular weight from about 500 to about 3000 dalton and alkylene oxide incorporation from about 20 to about 75 mol %.

A useful method for manufacturing the poly(tetramethylene-co-alkyleneether) glycol includes steps of (a) polymerizing tetrahydrofuran and at least one alkylene oxide having from 2 to 4 carbon atoms in the presence of an acid catalyst and at least one compound containing reactive hydrogen atoms at a temperature of from about 50°C to about 80°C to produce a polymerization product mixture comprising oligomeric cyclic ether, copolyether glycol, at least one dimer of the alkylene oxide, and tetrahydrofuran; (b) separating a majority of the tetrahydrofuran and at least a portion of the dimer of the alkylene oxide from the polymerization product mixture of step (a) to produce a crude product mixture comprising oligomeric cyclic ether and copolyether glycol; and (c) separating at least a portion of the oligomeric cyclic ether from the crude product mixture of step (b) to produce an oligomeric cyclic ether stream comprising oligomeric cyclic ether and a product stream comprising poly(tetramethylene-co-alkyleneether) glycol.

In this useful method, the alkylene oxide is selected from the group consisting of ethylene oxide; 1,2-propylene oxide; 1,3-propylene oxide; 1,2-butylene oxide; 2,3-butylene oxide; 1,3-butylene oxide and combinations thereof. The compound containing reactive hydrogen atoms is selected from the group consisting of water; ethylene glycol; 1,4-butanediol; polytetramethylene ether glycol having a molecular weight of from about 130 dalton to about 400 dalton; copolyether glycols having a molecular weight of from about 130 dalton to about 400 dalton; and combinations thereof. The acid catalyst is selected from the group consisting of acidified natural clays, acidified natural or synthetic zeolites, sheet silicates optionally activated by acid treatment, acidified zirconium/tin sulfate compounds, compounds comprising at least one catalytically active oxygen-containing molybdenum and/or tungsten moiety applied to an oxidic support, polymeric catalysts which contain sulfonic acid groups and combinations thereof. The tetrahydrofuran component may comprise at least one alkyltetrahydrofuran selected from the group consisting of 2-methyltetra-hydrofuran, 3-methyltetrahydrofuran, 3-ethyltetrahydrofuran, and combinations thereof.

The novel elastomer compositions of the present invention and blends or mixtures comprising same, may further comprise an effective amount of a stabilizer additive or compound, such as, for example, to prevent color formation. Many such stabilizers (e.g., antioxidants, ultraviolet light stabilizers and heat stabilizers) are known in the art, any of which may be used with the presently disclosed compatibilized product. Among stabilizers available for use with the present invention are substituted benzophenones, phenolic compounds, carbon black and sulfur compounds.

The novel elastomer compositions of the present invention and blends or mixtures comprising same, may further comprise an effective amount of a colored pigment additive or compound. Many colored pigments for use with the product of the present invention and mixtures comprising same are known in the art, any of which may be used. Among the pigments available for use with the present invention are carbon black, phthalocyanine blues, phthalocyanine greens, anthraquinone dyes, scarlet 2b Lake, azo compounds, acid azo pigments, quinacridones, chromophthalocyanine pyrrols, halogenated phthalocyanines, quinolines, heterocyclic dyes, perinone dyes, anthracenedione dyes, thiozanthene dyes, parazolone dyes, polymethine pigments and combinations thereof.

The novel elastomer compositions of the present invention and blends or mixtures comprising same, may also be combined with other or additional additives or compounds to provide the compositions with particular, desirable characteristics. Many such additives and compounds are known in the art. The use of appropriate additives or compounds is well within the skill of one in the art. Examples of such other or additional additives or compounds include UV stabilizers, anti-oxidants, light stabilizers, flame retardants, antistatic agents, biocides, fragrances, viscosity-breaking agents, impact modifiers, plasticizers, fillers, reinforcing agents, lubricants, mold release agents, blowing agents, nucleating agents and the like.

The polyurethane or copolyether ester or amide elastomer compositions of the present invention may be made into film or coating material. Films are made by standard techniques including extrusion, calendaring, film casting, and blow molding. Coating materials are made by standard techniques including solvent polymerization, emulsion polymerization, spray drying and plural component mixing and application.

Films comprising the polyurethane or copolyether ester or amide elastomer compositions of the present invention may be used in manufactured goods such as laminations onto textiles, foams, leather, and metal. Non-limiting examples of these uses include breathable waterproof clothing, mattress covers, and medical examination and surgical gloves. Coatings comprising polyurethane or copolyether ester elastomer compositions of the present invention may be used by textile converters or dip coaters. Non-limiting examples of this use include wet and dry coating of textiles, coagulation coating of woven and nonwoven substrates to make artificial leather, and dip coating to make gloves and similar protective articles.

Polyurethane or copolyether ester or amide elastomer compositions comprising a glycol derived from polymerization of alkylene oxide and tetrahydrofuran, the alkylene oxide having from 2 to 4 carbon atoms, i.e., poly(tetramethylene-co-alkyleneether) glycol, may be prepared generally as described below.

### Cast Polyurethane (CPU)

Cast polyurethanes are prepared by mixing reactive liquid components with or without pressure and with or without heat to produce a homogeneous mass which polymerizes at room temperature or greater to produce an elastomeric article. The components typically consist of an isocyanate-containing fraction and a fraction capable of reacting with an isocyanate group such as a diamine or diol. Stirring may be at a rate of from 10 to about 300 rpm such that the reaction exotherm does not exceed 80°C. The reactor may be heated to a temperature of from 70°C to 80°C, until the targeted residual isocyanate content is reached. The residual isocyanate content is from 1 to 15 % and represents the weight percent of isocyanate groups (N=C=O) contained in a given mass of prepolymer. The reaction mass is cooled to a temperature of from 50°C to 60°C, degassed and transferred to a sealed container. A solid resin is prepared in which the ratio of NCO groups to OH groups is from about 1.03 to about 1.06. The final polymer is prepared by combining the prepolymer with the requisite amount of diamine chain extender. The components are vigorously mixed, degassed, transferred to a mold, and cured at elevated temperature of from 50°C to 130°C, for an extended period of from 15 minutes to 24 hours. Test specimens are obtained from the resultant film. It is noted that the chain extender may be selected from the group consisting of amines, diamines, polyamines, alcohols, diols, polyols and combinations thereof. Non-limiting examples of methods for preparing cast polyurethanes are found in U.S. Patent No. 7,511,111 to Lawrey et al., and U.S. Patent No. 7,601,793 to Suzuki et al., incorporated herein by reference. Typical examples of cast polyurethane elastomers are skate wheels, print rollers, mining scrapers, energy absorbing pads and the like.

### Polyurethane Dispersion (PUD)

Polyurethane dispersions are prepared by reacting a water dispersible prepolymer with an aqueous solution of chain extender to produce a dispersion of polyurethane polymer in water. Non-limiting examples of methods for preparing a polyurethane dispersion are found in U.S. Patent No. 7,432,068 to Klingenberg et al. and U.S. Patent No. 7,345,110 to Gertzmann et al., incorporated herein by reference. A non-limiting example of the manufacture of a polyurethane dispersion involves the addition of from 1 to 10 wt % of dimethylol propionic acid (DMPA) to a prepolymer. When the residual isocyanate end point is reached, the DMPA is neutralized, such as, for example, with a 3° amine. Alternatively, a small amount of from about 0.001 wt % to less than about 5 wt %, based upon final solution volume, of a polar water miscible solvent such as, for example, n-methylpyrollidone (NMP) is added. To the prepolymer is added with vigorous stirring a cold aqueous solution of diamine chain extender. The solution is allowed to emulsify until it inverts (water in oil 〉̶ oil in water) and a dispersion of polyurethane in water is obtained.

### Thermoplastic Polyurethane (TPU)

Thermoplastic polyurethanes are prepared by combining polyols, diisocyanates, chain extenders, and various additives to generate linear polymers of finite molecular weight. Under the influence of heat and pressure the thermoplastic can be made to flow and form a film or solid article. Additionally, the thermoplastic can be dissolved in a solvent to make a coating solution. Non-limiting examples of methods for preparing thermoplastic polyurethanes are found in U.S. Patent No. 7,417,094 to Dewanjee, et al., and U.S. Patent No. 7,202,322 to Vedula, et al., incorporated herein by reference.

### Copolyether Ester (COPE)

Copolyether esters, which may be referred to herein as copolyesters, are thermoplastic engineering polymers available from DuPont under the trade name Hytrel®. They are thermoplastic elastomers exhibiting resistance to chemical solvents and dimensional stability at the temperatures found in, for example, automotive applications. They are prepared by combining an aromatic dicarboxylic acid or an equivalent with a long chain polyol and a short chain glycol to generate a block copolymer consisting of a soft block (polyol and dicarboxylic acid reaction product) and hard block (short chain glycol and dicarboxylic acid reaction product). A non-limiting example of a method for preparing a copolyether ester is found in British Patent No. 682,866 and U.S. Patent No. 2,744,087, incorporated herein by reference. A two-step synthesis of these materials is detailed in a review article by W.K. Witsiepe, Adv. Chem. Ser., 129, 39 (1973), incorporated herein by reference.

These copolyether esters are prepared by combining a catalyst with the requisite amounts of polyol, and aromatic diacid equivalent (typically, for example, dimethyl terephthalate) and an excess of a chain extender. The chain extender may be selected from the group consisting of ethylene glycol, 1,4-butanediol cyclohexane dimethyol, 1,3-propanediol and combinations thereof. Once the transesterification of the diacid equivalent is complete, the temperature is raised, such as to a temperature of from about 240°C to about 250°C, and excess extender is removed at reduced pressure until the desired degree of polymerization is attained as evidenced by the viscosity of the reaction mass. The polymer is removed from the reactor and is melt processed by a suitable means, including extrusion, calendaring or blow molding, to obtain a film.

### EXAMPLES

The presently described and claimed invention will be understood more fully by reference to the Examples below without intention of restricting the scope of the present claims. In these Examples, moisture vapor transmission is measure by a method essentially equivalent to ASTM E96. We use 50% humidity and a temperature of 70°F (21 °C) in our measurements under ASTM E96. The copolyether ester samples are hot pressed into 2-3 mil thick films, each sample is run as triplicates and the average data is reported below in Table 1.

The glass transition temperatures (Tg) were determined by differential scanning calorimeter (DSC) and dynamic mechanical analysis (DMA). The DMA is particularly useful with samples where melt phasing is present during the syntheses, i.e., showing two glass transition temperatures or a very broad Tg. Nuclear magnetic resonance (NMR) spectroscopy was used to determine the composition of the elastomer samples. The elastomer samples were dissolved in 1,1,2,2-tetrachloroethane-D2 for these measurements. For mechanical property testing, the elastomer samples were compression molded and tested as follows: Hardness, Shore (ASTM D2240), Tensile Strength (ASTM D412), Young's Modulus (ASTM D412), Elongation at break (ASTM D412), Tear Strength, Die C

(ASTM D1938), Taber Abrasion Loss (ASTM D1044) and Torsional Stiffness Clash-Berg (ASTM D1043).

### Example 1

A copolyether ester sample is prepared according to the recipe described in the review article by W.K. Witsiepe, Adv. Chem. Ser., 129, 39 (1973), incorporated herein by reference. The synthesis is carried out in a 1 liter stainless steel reactor. The first step is the transesterification between dimethyl terephthalate (DMT), a long chain poly(oxyethylene-co-oxytetramethylene ether) glycol with a molecular weight of 2025 g/mol and 49 mol % oxyethylene ether, and 1,4-butanediol (BDO) with tetra-n-butyl titanate catalyst at a temperature of from 190-210°C. In the second step, the resulting butylene terephthalate and copolyether terephthalate from the first step are polycondensated to the final product at 250°C and about 100 micro Hg vacuum. The polybutylene terephthalate (PBT) hard segment content is determined by NMR to be 50 wt %.

### Example 2

A copolyether ester sample is prepared in the same way as in Example 1, except with a PBT hard segment content of 40 wt %. Also, the long chain poly(oxyethylene-co-oxytetramethylene ether) glycol for the first step has a molecular weight of 2100 g/mol and 69 mol % oxyethylene. The PBT hard segment content is determined by NMR to be 40 wt %.

### Comparative Examples 1 and 2

Copolyether ester samples are prepared the same way as those of Examples 1 and 2 except the polyol is a 2000 g/mol homopolymer PTMEG and the PBT hard segment contents are 40 wt % and 50 wt %, respectively.

### Comparative Examples 3 and 4

Copolyether ester samples for these comparative examples are two commercial Hytrel® copolyether ester products purchased from Ashland Inc. Both samples have the EOPPG bock copolyether polyol with 36 mol % PPG as the soft segment. The hard segment contents for these examples are 38 wt % and 48 wt %, respectively.

**Table 1**

| **Product Property** | **Ex. 1** | **Ex. 2** | **Comp. Ex.1** | **Comp. Ex. 2** | **Comp. Ex.3** | **Comp. Ex. 4** |
|---|---|---|---|---|---|---|
| PBT, wt.% | 50 | 40 | 40 | 50 | 38 | 48 |
| SS Mw. (1) | 2025 | 2100 | 2000 | 2000 | 2100 | 2100 |
| SS Type | (2) | (3) | PTMEG | PTMEG | EOPPG (4) | EOPPG (4) |
| Hardness Shore D | 47 | 35 | 48 | 47 | 27 | 50 |
| Tensile Strength (psi) | 5735 | 1790 | 5100 | 2901 | 2695 | 2949 |
| Young's Modulus M100 (psi) | 1880 | 1190 | 2200 | 1995 | 749 | 2181 |
| % Elongation | 860 | 420 | 620 | 448 | 1282 | 299 |
| Die C Tear Strength (ppi) | 578 | 427 | 751 | 564 | 328 | 526 |
| Taber Abrasion Loss (mg/1000 rpm) (5) | 83.8 | 109.0 | 91.0 | 105.4 | 317.3 | 153.8 |
| Tg by Tan δ (°C) | -63 | -62 | -70, 10 | -57 (broad) | -51 | -52 |
| Tan δ @ 25°C | 0.033 | 0.032 | 0.093 | 0.043 | 0.034 | 0.033 |
| Clash-Berg Stiffness (6),T(°C)= 45,000 psi | -93.9 | | -49.4 | -81.7 | | -72.8 |
| WVTR (g-mil/m²-day) | 1011 | 1675 | 210 | 490 | 1150 | 790 |

| | | | | | | |
|---|---|---|---|---|---|---|
| (1) "SS" is soft segment (2) Poly(oxyethylene-co-oxytetramethylene ether) glycol 49 mol % oxyethylene (3) Poly(oxyethylene-co-oxytetramethylene ether) glycol 69 mol % oxyethylene (4) Block copolymer of EOPPG with 36 mol % PEG (5) H-22 wheel (6) Clash-Berg stiffness - torsional stiffness test | | | | | | |

Data in Table 1 indicates that significantly increased moisture permeability is attained with the films of the present invention comprising the EOTHF copolymer relative to the other COPE materials that were derived from the homopolyether polyol, PTMEG. Comparable or even better moisture permeability could be attained with the films of the present invention relative to the COPE materials produced from the ethylene oxide capped polypropylene glycol (EOPPG) as the soft segment.

The mechanical property data in Table 1 also indicates that the COPE materials derived from the films of the present invention will have significantly better mechanical strength in addition to the superior moisture permeability than that from materials derived from EOPPG, and similar or better in certain compositions than that derived from the PTMEG. Both mechanical strength and moisture permeability may be tuned to meet particular needs of the end use application by varying the composition of the soft segment, i.e., the average molecular weight and the EO incorporation, or the content or type of the polyester hard segment.

### Example 3 (CPU film)

For preparing cast polyurethane (CPU) film, the requisite mass, e.g., one part, of diisocyanate is placed in a heated vessel. Polyol as described previously sufficient to react with a diisocyanate to produce a prepolymer with residual isocyanate content of the desired level, is added with stirring at about 250 rpm and at a rate such that the reaction exotherm does not exceed 80°C. After addition of the polyol, the reactor is heated to a temperature of about 75°C, until the targeted residual isocyanate content is reached. The residual isocyanate content is about to 10 % and represents the weight percent of isocyanate groups (N=C=O) contained in a given mass of prepolymer. The reaction mass is cooled to a temperature of about 55°C, degassed and transferred to a sealed container.

The final polymer is prepared by combining the prepolymer with the requisite amount of diamine chain extender. The components are vigorously mixed, degassed, transferred to a mold, and cured at elevated temperature of about 100°C, for a period of about 12 hours. A test specimen is obtained from the resultant film. It is noted that the chain extender may be selected from the group consisting of amines, diamines, polyamines, alcohols, diols, polyols and combinations thereof.

### Example 4 (TPU film)

A solid resin is prepared as in Example 3 in which the ratio of NCO groups to OH groups is from 1.00 to 1.02. This material is granulated and melt processed to produce three films by extrusion, one with poly(oxyethylene-co-oxytetramethylene ether) glycol with a molecular weight of 2025 g/mol and 49 mol % oxyethylene, a second with EOPPG bock copolyether polyol with 36
mol % PPG, and a third with homopolymer PTMEG. The film derived from the poly(oxyethylene-co-oxytetramethylene ether) glycol has better mechanical strength than that derived from EOPPG, and has better moisture permeability than that derived from homopolyol PTMEG.

### Example 5 (PUD and its casted film)

For the manufacture of a polyurethane dispersion, a prepolymer is made as described in Example 3 with the addition of about 5 wt % of dimethylol propionic acid (DMPA). When the residual isocyanate end point is reached, the DMPA is neutralized with a 3° amine. To the prepolymer is added with vigorous stirring a cold aqueous solution of diamine chain extender. The solution is allowed to emulsify until it inverts (water in oil 〉̶ oil in water) and a dispersion of polyurethane in water is obtained.

Films derived from the polyurethane dispersion are prepared using the poly(oxyethylene-co-oxytetramethylene ether) glycol, the homopolyol PTMEG and the block copolyether polyol EOPPG. The film derived from the poly(oxyethylene-co-oxytetramethylene ether) glycol has better mechanical strength than that derived from the EOPPG, and has better moisture permeability than that derived from the homopolyol PTMEG.

All patents, patent applications, test procedures, priority documents, articles, publications, manuals, and other documents cited herein are fully incorporated by reference to the extent such disclosure is not inconsistent with this invention and for all jurisdictions in which such incorporation is permitted.

When numerical lower limits and numerical upper limits are listed herein, ranges from any lower limit to any upper limit are contemplated.

While the illustrative embodiments of the invention have been described with particularity, it will be understood that various other modifications will be apparent to and may be readily made by those skilled in the art without departing from the spirit and scope of the invention. Accordingly, it is not intended that the scope of the claims hereof be limited to the examples and descriptions set forth herein but rather that the claims be construed as encompassing all the features of patentable novelty which reside in the present invention, including all features which would be treated as equivalents thereof by those skilled in the art to which the invention pertains.

The invention may also be described by reference to the following exemplary embodiments.

### Exemplary Embodiments

1. An elastomeric composition comprising from about 20 to less than about 70 wt % first component polyol derived from random copolymerization of alkylene oxide having from 2 to 4 carbon atoms and tetrahydrofuran, and from more than about 30 to about 80 wt % second component polyurethane, copolyether ester or copolyether amide, said elastomeric composition having a water vapor transmission rate of greater than about 250 g-mil/m²-day and a tensile strength greater than about 1500 psi.
2. The composition of embodiment 1 wherein the first component polyol has a molecular weight of from about 500 to about 3000 dalton and an alkylene oxide incorporation of from about 20 to about 75 mol %.
3. The composition of embodiment 1 comprising from about 35 to about 65 wt % first component polyol derived from random copolymerization of alkylene oxide having from 2 to 4 carbon atoms and tetrahydrofuran, and from about 35 to about 65 wt % second component polyurethane, copolyether ester or copolyether amide.
4. The composition of embodiment 1 wherein said first component polyol is manufactured by steps comprising: (a) polymerizing tetrahydrofuran and at least one alkylene oxide having from 2 to 4 carbon atoms in the presence of an acid catalyst and at least one compound containing reactive hydrogen atoms at a temperature of from about 50°C to about 80°C to produce a polymerization product mixture comprising oligomeric cyclic ether, copolyether glycol, at least one dimer of the alkylene oxide, and tetrahydrofuran; (b) separating a majority of the tetrahydrofuran and at least a portion of the dimer of the alkylene oxide from the polymerization product mixture of step (a) to produce a crude product mixture comprising oligomeric cyclic ether and copolyether glycol; and (c) separating at least a portion of the oligomeric cyclic ether from the crude product mixture of step (b) to produce an oligomeric cyclic ether stream comprising oligomeric cyclic ether and a product stream comprising the polyol.
5. The composition of embodiment 4 wherein the alkylene oxide in the polyol manufacturing step (a) is selected from the group consisting of ethylene oxide; 1,2-propylene oxide; 1,3-propylene oxide; 1,2-butylene oxide; 2,3-butylene oxide; 1,3-butylene oxide and combinations thereof.
6. The composition of embodiment 4 wherein the compound containing reactive hydrogen atoms in the polyol manufacturing step (a) is selected from the group consisting of water; ethylene glycol; 1,4-butanediol; polytetramethylene ether glycol having a molecular weight of from about 130 dalton to about 400 dalton; copolyether glycols having a molecular weight of from about 130 dalton to about 400 dalton; and combinations thereof.
7. The composition of embodiment 6 wherein the compound containing reactive hydrogen atoms is water.
8. The composition of embodiment 4 wherein the acid catalyst in the polyol manufacturing step (a) is selected from the group consisting of acidified natural clays, acidified natural or synthetic zeolites, sheet silicates optionally activated by acid treatment, acidified zirconium/tin sulfate compounds, compounds comprising at least one catalytically active oxygen-containing molybdenum and/or tungsten moiety applied to an oxidic support, polymeric catalysts which contain sulfonic acid groups and combinations thereof.
9. The composition of embodiment 4 wherein the tetrahydrofuran component in the polyol manufacturing step (a) further comprises at least one alkyltetrahydrofuran selected from the group consisting of 2-methyltetrahydrofuran, 3-methyltetrahydrofuran, 3-ethyltetrahydrofuran, and combinations thereof.
10. The composition of embodiment 4 wherein the alkylene oxide is ethylene oxide, the acid catalyst comprises a polymeric catalyst which contains sulfonic acid groups, and the compound containing reactive hydrogen atoms is selected from the group consisting of water; ethylene glycol; 1,4-butanediol; polytetramethylene ether glycol having a molecular weight of from about 130 dalton to about 400 dalton; copolyether glycols having a molecular weight of from about 130 dalton to about 400 dalton; and combinations thereof.
11. The composition of embodiment 1 wherein said second component is polyurethane.
12. The composition of embodiment 1 wherein said second component is copolyether ester.
13. The composition of embodiment 1 wherein said second component is copolyether amide.
14. The composition of embodiment 11 wherein said polyurethane is selected from the group consisting of cast polyurethane, thermoplastic polyurethane and polyurethane dispersion.
15. An elastomeric composition comprising from about 20 to less than about 70 wt % first component polyol derived from random copolymerization of ethylene oxide and tetrahydrofuran, and from more than about 30 to about 80 wt % second component polyurethane, copolyether ester or copolyether amide, said elastomeric composition having a water vapor transmission rate of greater than about 250 g-mil/m²-day and a tensile strength greater than about 1500 psi.
16. The composition of embodiment 15 wherein the first component polyol has an ethylene oxide incorporation of from about 20 to about 75 mol %.
17. The composition of embodiment 15 comprising from about 35 to about 65 wt % first component polyol derived from random copolymerization of ethylene oxide and tetrahydrofuran, and from about 35 to about 65 wt % second component polyurethane, copolyether ester or copolyether amide.
18. A film comprising the elastomeric composition of embodiment 1.
19. The film of embodiment 18 wherein said second component is polyurethane.
20. The film of embodiment 18 wherein said second component is copolyether ester.
21. The film of embodiment 18 wherein said second component is copolyether amide.

## Claims

1. A film comprising an elastomeric composition comprising from 20 to less than 70 wt % first component polyol derived from random copolymerization of alkylene oxide having from 2 to 4 carbon atoms and tetrahydrofuran, and from more than 30 to 80 wt % second component polyurethane, copolyether ester or copolyether amide, said elastomeric composition having a water vapor transmission rate of greater than 250 g-mil/m²-day measured accordingly to ASTM E96 using 50% humidity and a temperature of 21 °C and a tensile strength greater than 1500 psi measured according to ASTM D412.

2. The film of claim 1 wherein the first component polyol has a molecular weight of from 500 to 3000 dalton and an alkylene oxide incorporation of from 20 to 75 mol %.

3. The film of claim 1 comprising from 35 to 65 wt % first component polyol derived from random copolymerization of alkylene oxide having from 2 to 4 carbon atoms and tetrahydrofuran, and from 35 to 65 wt % second component polyurethane, copolyether ester or copolyether amide.

4. The film of claim 1 wherein said first component polyol is manufactured by steps comprising: (a) polymerizing tetrahydrofuran and at least one alkylene oxide having from 2 to 4 carbon atoms in the presence of an acid catalyst and at least one compound containing reactive hydrogen atoms at a temperature of from 50°C to 80°C to produce a polymerization product mixture comprising oligomeric cyclic ether, copolyether glycol, at least one dimer of the alkylene oxide, and tetrahydrofuran; (b) separating a majority of the tetrahydrofuran and at least a portion of the dimer of the alkylene oxide from the polymerization product mixture of step (a) to produce a crude product mixture comprising oligomeric cyclic ether and copolyether glycol; and (c) separating at least a portion of the oligomeric cyclic ether from the crude product mixture of step (b) to produce an oligomeric cyclic ether stream comprising oligomeric cyclic ether and a product stream comprising the polyol.

5. The film of claim 4 wherein the alkylene oxide in the polyol manufacturing step (a) is selected from the group consisting of ethylene oxide; 1,2-propylene oxide; 1,3-propylene oxide; 1,2-butylene oxide; 2,3-butylene oxide; 1,3-butylene oxide and combinations thereof.

6. The film of claim 4 wherein the compound containing reactive hydrogen atoms in the polyol manufacturing step (a) is selected from the group consisting of water; ethylene glycol; 1,4-butanediol; polytetramethylene ether glycol having a molecular weight of from 130 dalton to 400 dalton; copolyether glycols having a molecular weight of from 130 dalton to 400 dalton; and combinations thereof, for instance wherein the compound containing reactive hydrogen atoms is water.

7. The film of claim 4 wherein the acid catalyst in the polyol manufacturing step (a) is selected from the group consisting of acidified natural clays, acidified natural or synthetic zeolites, sheet silicates optionally activated by acid treatment, acidified zirconium/tin sulfate compounds, compounds comprising at least one catalytically active oxygen-containing molybdenum and/or tungsten moiety applied to an oxidic support, polymeric catalysts which contain sulfonic acid groups and combinations thereof.

8. The film of claim 4 wherein the tetrahydrofuran component in the polyol manufacturing step (a) further comprises at least one alkyltetrahydrofuran selected from the group consisting of 2-methyltetrahydrofuran, 3-methyltetrahydrofuran, 3-ethyltetrahydrofuran, and combinations thereof.

9. The film of claim 4 wherein the alkylene oxide is ethylene oxide, the acid catalyst comprises a polymeric catalyst which contains sulfonic acid groups, and the compound containing reactive hydrogen atoms is selected from the group consisting of water; ethylene glycol; 1,4-butanediol; polytetramethylene ether glycol having a molecular weight of from 130 dalton to 400 dalton; copolyether glycols having a molecular weight of from 130 dalton to 400 dalton; and combinations thereof.

10. The film of claim 1 wherein said second component is polyurethane, for example wherein said polyurethane is selected from the group consisting of cast polyurethane, thermoplastic polyurethane and polyurethane dispersion.

11. The film of claim 1 wherein said second component is copolyether ester.

12. The film of claim 1 wherein said second component is copolyether amide.

13. A film of claim 1 comprising an elastomeric composition comprising from 20 to less than 70 wt % first component polyol derived from random copolymerization of ethylene oxide and tetrahydrofuran, and from more than 30 to 80 wt % second component polyurethane, copolyether ester or copolyether amide, said elastomeric composition having a water vapor transmission rate of greater than 250 g-mil/m²-day and a tensile strength greater than 1500 psi.

14. The film of claim 13 wherein the first component polyol has an ethylene oxide incorporation of from 20 to 75 mol %.

15. The film of claim 13 comprising from 35 to 65 wt % first component polyol derived from random copolymerization of ethylene oxide and tetrahydrofuran, and from 35 to 65 wt % second component polyurethane, copolyether ester or copolyether amide.
